# EUROPÄISCHE PATENTANMELDUNG

(11) **EP 1 464 468 A1**
(43) Veröffentlichungstag der Anmeldung: **06.10.2004**
(21) Anmeldenummer: 04008215.8
(22) Anmeldetag: 05.04.2004
(51) Int. Cl.: B29C 47/90

(54) **Einstellbare Kalibrierhülse mit helixartigem Schlitz**

(30) Priorität: 04.04.2003 DE 20305616 U
(71) Anmelder: Cepukaite-Urboneit, Rasa, 31711 Luhden (DE)
(72) Erfinder: Figge, Thomas, 31840 Hessisch-Oldendorf (DE); Christensen, Bjarne, 8660 Skanderborg (DK)
(74) Vertreter: Taruttis, Stefan, Dr.

(57) **Zusammenfassung**

Die vorliegende Erfindung betrifft eine Kalibrierhülse (10) mit ringförmigem Querschnitt, deren Durchmesser veränderlich ist, zur Kalibrierung extrudierter Kunststoffprofile, die dadurch gekennzeichnet ist, dass die Kalibrierhülse (10) Radialschlitze (11) aufweist, die Ringabschnitte (12) voneinander bereichsweise trennen, sodass die Ringabschnitte (12) noch durch jeweils mindestens einem Verbindungsbereich (13) miteinander verbunden sind und dadurch dass die Kalibrierhülse (10) einen zusätzlichen Schlitz (14) aufweist, der zur Achse der Kalibrierhülse (10) in einem Winkel verläuft, und der zusätzliche Schlitz (14) in mindestens einem vollständigen Umlauf durch die Ringabschnitte verläuft.

## Beschreibung

Die vorliegende Erfindung betrifft eine Kalibrierhülse, mit der extrudierte Kunststoffprofile, wie Kunststoffrohr, maßhaltig abgekühlt werden können. Eine solche Kalibrierhülse hat einen kreisförmigen Durchmesser und einen ringförmigen Querschnitt mit einer Eintrittsöffnung und einer Austrittsöffnung, durch welche das extrudierte Kunststoffprofil hindurchgeführt wird.

Die vorliegende Erfindung betrifft insbesondere eine Kalibrierhülse, deren Innendurchmesser eingestellt werden kann, wobei die Einstellung vorzugsweise ohne Unterbrechung des Produktionsverfahrens vorgenommen werden kann.

Weiterhin betrifft die vorliegende Erfindung ein Verfahren zur Herstellung von Kunststoffröhren mit der erfindungsgemäßen Kalibrierhülse.

Das aus dem Extruder austretende Kunststoffrohr ist plastifiziert und unterliegt während der Abkühlung je nach Art des Kunststoffs, der Plastifizierungstemperatur, der Extrusionsgeschwindigkeit und der Abkühlrate einer Schrumpfung. Kalibrierhülsen werden verwendet, um die Schrumpfung so zu kontrollieren, dass das Kunststoffrohr einen kontrollierten Außendurchmesser aufweist, sowie eine kontrollierte Wandstärke. Dabei wird außen an der Kalibrierhülse ein Vakuum angelegt, das durch Bohrungen oder Schlitze auf das in der Kalibrierhülse geführte Kunststoffrohr wirken kann. Für die Abkühlung des Kunststoffrohrs wird die Kalibrierhülse von außen mit Wasser umspült, wobei das Kühlwasser auch eine Schmierfunktion zwischen Kunststoffrohr und Kalibrierhülse ausubt. Nach dem Durchtritt durch die Kalibrierhülse soll das Kunststoffrohr einen definierten Außendurchmesser aufweisen, um in der nachfolgenden Kühlung im Wasserbad mit anschließender Aufwicklung oder Sägen vorherbestimmbar seine endgültige Form zu erreichen.

Einstellbare Kalibrierhülsen, d.h. Kalibrierhülsen, deren Innendurchmesser zumindest bereichsweise eingestellt werden kann, ermöglichen die Steuerung der Formgebung und Abkühlung des extrudierten Kunststoffrohrs in der Kalibrierhülse während der laufenden Produktion zur Anpassung an veränderte Produktionsbedingungen, wie z.B. veränderte Kühlwassertemperaturen. Weiterhin weisen Kunststoffrohre mit unterschiedlichen Wandstärken für jeweilige Druckstufen ein abweichendes Schrumpfverhalten auf, sodass auch gleiche Außendurchmesser der Rohre bei unterschiedlichen Wandstärken einen anderen Innendurchmesser der Kalibrierhülse erfordern.

Die EP 1157805 offenbart eine verstellbare Kalibrierhülse, deren Durchmesser durch Verstellen von mindestens einem Preßring verändert werden kann. Zum Ausgleich der Umfangsänderung der Kalibrierhülse bei der Verringerung des Durchmessers ist mindestens ein in Zacken und Wellen verlaufender Längsschlitz vorgesehen, der parallel zur Achse der Kalibrierhülse angebracht ist.

An dieser Kalibrierhülse ist nachteilig, dass ein solcher Längsschlitz nur einen Teilbereich der Umfangsfläche der Kalibrierhülse und auch des späteren Rohrs überstreicht, sodass Unregelmäßigkeiten über den Querschnitt der Kalibrierhülse, die durch die Längsschlitze gebildet werden, in der Folge auf den hier geformten Bereich des Kunststoffrohrs konzentriert sind. Insbesondere werden solche Unregelmäßigkeiten durch ein anderes Abkühlverhalten und eine andere Oberflächenreibung im Bereich der Längsschlitze erzeugt, sodass das schließlich produzierte Kunststoffrohr Längsstreifen mit unterschiedlichen Materialeigenschaften aufweisen kann.

Überdies ändern die zacken- oder wellenförmigen Längsschlitze das Biegeverhalten dieser Hülse ungleichmäßig, da zumindest Teilbereiche der Hülsenwand unterschiedliche Abstände zum Längsschlitz aufweisen, sodass ein C- oder U-förmiger Querschnitt resultiert. Im Ergebnis werden hier Rohre produziert, deren Profil vom runden Querschnitt abweicht.

Insbesondere bei der Anordnung mehrerer Längsschlitze werden aus der Hülsenwand Zungen gebildet, die nur einseitig festgelegt sind. Auf diese Weise lässt sich einerseits keine stabile Halterung solcher Zungen erreichen, andererseits lässt sich die Hülse nur unregelmäßig zusammendrücken, da der Bereich der einen Öffnung keine Längsschlitze aufweist und einen starren Abschnitt bildet.

Gemäß der EP 1157805 wird mindestens ein Preßring an der Austrittsöffnung angeordnet, um den Durchmesser dieser einstellbaren Kalibrierhülse zu verringern, ggf. ein zweiter Preßring in der Mitte der Kalibrierhülse. In der Praxis hat sich gezeigt, dass die Verringerung des Durchmessers dieser Kalibrierhülse nur an der Austrittsöffnung erfolgen kann und wesentlich größer sein muss, als die schließlich erhaltene und erzielbare Verringerung des Außendurchmessers des hindurchtretenden Rohrs. Weiterhin zeigt sich in der Praxis, dass die erforderliche große Verringerung des Durchmessers der Kalibrierhülse an ihrer Austrittsöffnung zu sehr großen notwendigen Zugkräften führt, mit der das extrudierte Rohr durch die Kalibrierhülse gezogen wird. Solche hohen Zugkräfte führen zum unerwünschten Strecken und Verändern der Dimensionen des erzeugten Kunststoffrohrs.

Die EP 0825920 vermeidet den Nachteil der EP 1157805 hinsichtlich der ungleichmäßig über den Umfang verteilten Längsschlitze, in dem einzelne kurze Ringelemente mit axial verlaufendem Schlitz zur Bildung einer Kalibrierhülse aneinandergereiht sind. Die Schlitze der einzelnen Ringelemente sind gegeneinander versetzt und dadurch in der Summe über die Umfangsfläche der Kalibrierhülse verteilt. Außenliegende axiale Stangen können durch gegeneinander wirkende Keilflächen gegen die Außenseite der einzelnen Ringe der zusammengesetzten Kalibrierhülse gedrückt werden, um deren Durchmesser zu verringern. Die Schlitze der Ringelemente dienen dem Ausgleich der Umfangsänderung.

An dieser Kalibrierhülse ist jedoch nachteilig, dass die einzelnen Ringelemente ohne die außen liegenden axialen Stangen auseinander fallen würden und überdies durch Distanzansätze auf Abstand gehalten werden müssen, um den Durchtritt von Kühlwasser, das auch als Schmiermittel fungiert, zu gewährleisten.

Der vorliegenden Erfindung stellt sich daher die Aufgabe, eine verstellbare Kalibrierhülse bereitzustellen, die die Nachteile des Standes der Technik vermeidet. Insbesondere soll die erfindungsgemäße Kalibrierhülse eine gleichmäßige Veränderung ihres Innendurchmessers bzw. des Außendurchmessers des zu kalibrierenden Rohrs ermöglichen, sowie eine Herstellung von Kunststoffprofilen, wie Kunststoffrohren, mit vorbestimmter Oberfläche und Wandstärke.

In einer ersten Ausführungsform weist die erfindungsgemäße Kalibrierhülse im Wesentlichen den Umfang eines Rohrabschnitts auf, der weitere Anbauten, wie Flanschen, an den Enden haben kann. Die Wandung dieses Rohrabschnitts ist durch Säugöffnungen unterbrochen, wie Bohrungen oder bereichsweise Schlitze, um für den Durchschnitt von ausreichendem Unterdruck und auch Kühlwasser zu sorgen. Diese Saugöffnungen sind ebenso wie bei bekannten, sogenannten statischen Kalibrierhülsen, deren Durchmesser unveränderlich ist, gleichmäßig oder unregelmäßig über die Wandung verteilt und sind so bemessen, dass die mechanische Stabilität, d.h. die Starrheit des Rohrabschnitts nicht beeinträchtigt wird.

Die erste Ausführungsform erreicht dadurch die Verstellbarkeit des Durchmessers, dass ein zusätzlicher wendelförmiger oder zumindest bereichsweise geradliniger Schlitz durch die Wandung verläuft. Wenn der zusätzliche Schlitz in Form eines wendelförmigen Schlitzes (Wendelschlitz) ausgeführt ist, so stimmt dessen Achse mit der Achse der Kalibrierhülse überein. Für den Fall, dass der zusätzliche Schlitz zumindest bereichsweise geradlinig verläuft, beispielsweise geradlinig oder aus mindestens zwei gradlinigen Abschnitten besteht, die in einem Winkel ineinander übergehen, so verläuft auch dieser zusätzliche Schlitz in einem Winkel zur Achse der Kalibrierhülse, vorzugsweise in einem Winkel von 10 bis 60 Grad, und durchläuft die Kalibrierhülse in ihrer gesamten Länge.

Dieser zusätzliche Schlitz unterbricht die Wandung der Kalibrierhülse vollständig und verläuft wendelförmig oder linear und zur Achse der Hülse geneigt, vorzugsweise in Form einer Wendel mit einem anteiligen Umlauf von 0,2 bis 0,95 eines vollständigen Umlaufs (ein Anteil von 1 entspricht 360 °) durch die Mantelfläche der Kalibrierhülse. Dabei kann dieser anteilig umlaufende zusätzliche Schlitz auch die Saugöffnungen kreuzen. Es ist jedoch bevorzugt, dass die Saugöffnungen so angeordnet sind, dass sie nicht von dem zusätzlichen Schlitz gekreuzt werden. Auf diese Weise werden Zungen oder Ausnehmungen in der Hülsenwandung vermieden, die unmittelbar an den zusätzlichen Schlitz angrenzen und für größere Öffnungen in der Hülsenwandung sorgen, als der zusätzliche Schlitz oder eine Saugöffnung allein.

Jede Ausführungsform der erfindungsgemäßen Kalibrierhülse kann zusätzlich radial umlaufende Nuten auf ihrer Innen- und/oder Außenfläche aufweisen. Diese Nuten sind vorzugsweise regelmäßig beabstandet. Solche Nuten verringern die Wandstärke der Wandung, die durch äußere Kräfte zu biegen ist, um den Durchmesser der Kalibrierhülse zu verringern. Saugöffnungen sind vorzugsweise in den Bereichen der Hülse angeordnet, in denen keine Nuten verlaufen.

In einer zweiten Ausführungsform weist die erfindungsgemäße Kalibrierhülse im Wesentlichen den Umfang eines Rohrabschnitts auf, der weitere Anbauten, wie beispielsweise Flanschen, an den Enden haben kann. Dieser Rohrabschnitt hat in vorzugsweise regelmäßigen Abständen Radialschlitze, die jeweils Ringabschnitte begrenzen. Die Ringabschnitte sind über die Radialschlitze hinweg in mindestens einem Verbindungsbereich miteinander verbunden. Diese Verbindungsbereiche sind Wandbereiche des Rohrabschnitts, aus dem die Kalibrierhülse gefertigt werden kann. Zusätzlich zu den Radialschlitzen weist die erfindungsgemäße Kalibrierhülse einen zusätzlichen Schlitz auf.

Dieser zusätzliche Schlitz erstreckt sich durch alle Ringabschnitte hindurch und ist gegenüber der gemeinsamen Achse der Ringabschnitte geneigt. Vorzugsweise verläuft dieser zusätzliche Schlitz wendelförmig (Wendelschlitz), kann jedoch auch gradlinig oder in gradlinigen Abschnitten verlaufen, die in flachen Winkeln ineinander übergehen. Im Falle eines wendelförmigen zusätzlichen Schlitzes verläuft die Achse dieser Wendel parallel zur Achse der Kalibrierhülse, im Falle eines zumindest abschnittsweise geradlinigen zusätzlichen Schlitzes ist dieser gegenüber der Achse der Kalibrierhülse geneigt, vorzugsweise in einem Winkel von mindestens 10, bevorzugter mindestens 30 Grad.

Die Verbindungsbereiche, die die Ringabschnitte miteinander verbinden, können beispielsweise so angeordnet sein, dass sie ebenfalls so angeordnet sind, wie der zusätzliche Schlitz, beispielsweise in Form einer Wendel, oder geradlinig gegen die Achse der Kalibrierhülse geneigt. Der Bereich, in dem die Verbindungsbereiche angeordnet sind, kann auf den Ringabschnitten jeweils gegenüberliegend der zu dem zusätzlichen Schlitz liegen, oder jeweils ein- oder beidseitig neben dem zusätzlichen Schlitz angeordnet sein, oder alternativ einen Bereich beschreiben, der zu dem zusätzlichen Schlitz parallel auf der Hülse verschoben verläuft. In einer weiteren erfindungsgemäßen Ausführungsform sind die Verbindungsbereiche unregelmäßig oder statistisch gegeneinander versetzt oder in einer Linie angeordnet ist, die zur Hülsenachse geneigt sein kann.

Der erfindungsgemäß wendelförmig oder zur Längsachse der Hülse geneigt verlaufende lineare zusätzliche Schlitz in der Hülse dient bei allen Ausführungsformen dem Ausgleich der Umfangsänderung bei einer Veränderung des Durchmessers der Kalibrierhülse. Der zusätzliche Schlitze hat vorzugsweise eine konstante Breite, die die Änderung des Hülsenumfangs aufnehmen kann, die bei Verringerung ihres Durchmessers auftritt.

Dieser zusätzliche Wendelschlitz vollzieht sich bei der zweiten Ausführungsform in mindestens einem 0,95-fachen, vorzugsweise mindestens einem vollständigen Umlauf durch die Hülsenwandung, vorzugsweise in 2 bis 5, insbesondere 2,5, 3 oder 4 Umläufen. Die Radialschlitze sind von mindestens einem Verbindungsbereich unterbrochen, der die jeweils benachbarten Ringabschnitte miteinander verbindet, es können jedoch auch zwei Verbindungsbereiche jeweils angrenzend an den zusätzlichen Schlitz vorhanden sein, oder mehrere Verbindungsbereiche, die um die Länge der Radialschlitze regelmäßig angeordnet sind, wie beispielsweise zwei, drei oder vier Verbindungsbereiche in jeweils gleichem Abstand zueinander. Für eine gleichmäßige Verformung der Kalibrierhülse bei der Änderung ihres Durchmessers sind die Verbindungsbereiche vorzugsweise in der Form des zusätzlichen Schlitzes und parallel zu diesem versetzt über die Länge der Hülse angeordnet, die beispielsweise im Falle eines wendelförmigen zusätzlichen Schlitzes parallel und versetzt zu der Wendelung angeordnet sind.

Durch diese besondere Schlitzführung durch den Rohrabschnitt wird eine einstückige Kalibrierhülse bereitgestellt, deren Durchmesser gleichmäßig verstellt werden kann, wobei die zylindrische Form der Kalibrierhülse bei allen Ausführungsformen erhalten bleibt.

Als besonderen Vorteil bietet die erfindungsgemäße Kalibrierhülse auch bei gegenüber dem ungeschlitztem Rohrabschnitt verändertem Durchmesser stets eine zylindrische Form, da der zusätzliche Schlitz, mit einem anteiligen Umlauf gegenüber der ersten Ausführungsform und mindestens einem vollständigen Umlauf gemäß der zweiten Ausführungsform, in Kombination mit Radialschlitzen, dass er eine solche Verteilung des Hülsendurchmessers ermöglicht, dass ein kreisförmiger Innendurchmesser der Hülse erhalten bleibt. Insbesondere bei der zweiten Ausführungsform wird durch das Zusammenwirken von Radialschlitzen und zusätzlichem Schlitz eine besonders gleichmäßige Verteilung der Biegebewegung in Umfangsrichtung der Hülse erzielt.

Als weiteren Vorteil bietet die erfindungsgemäße Kalibrierhülse beider Ausführungsformen als einstückiges Bauteil die Möglichkeit einer einfachen Montage und eines einfachen Auswechselns der gesamten Hülse in einem Stück. Im Unterschied dazu sind gemäß EP 0825920 eine Vielzahl einzelner geschlitzter Ringe erforderlich, zwischen denen überdies noch Distanzansätze anzuordnen sind.

Weiterhin gewährleistet der zusätzliche Schlitz eine systematische und gleichmäßige Verteilung dieser Öffnung in der Mantelfläche über die Länge der Kalibrierhülse, sodass das hindurchtretende Kunststoffrohr in axialer Errichtung gleichmäßig über den zusätzlichen Schlitz geführt wird. Als weiteren Vorteil bietet der zusätzliche Schlitz, dass seine lichte Öffnung in Richtung der Achse der Hülse geringer ist, als dies bei einem parallel zur Achse der Hülse verlaufenden zusätzlichen Schlitz der Fall wäre. Daher minimiert der wendelförmige oder zumindest abschnittsweise lineare, gegenüber der Achse der Kalibrierhülse in einem Winkel verlaufende zusätzliche Schlitz die Wirkungen der zusätzlichen Öffnung in der Kalibrierhülse gegenüber einem in den axialer Richtung verlaufenden Schlitz. So wird das Kunststoffrohr durch die gleichmäßige Verteilung der zusätzlichen Schlitzes nur minimal von Unregelmäßigkeiten der Wandöffnung in Form des zusätzlichen Schlitzes, die zum Ausgleich der Durchmesserverstellung erforderlich ist, beeinträchtigt.

Allgemein kann der zusätzliche Schlitz der idealen Lienenführung einer Schraubenform entsprechen, die sich um den Umfang der Hülse herum windet. Die Steigung bzw. Neigung gegenüber der Hülsenachse dieses zusätzlichen Schlitzes ist dabei vorzugsweise konstant, kann jedoch auch über die Länge der Hülse bereichsweise unterschiedlich sein. Der zusätzliche Schlitz, insbesondere als Wendelschlitz, kann auch der idealen Linienführung einer Wendel angenähert sein, beispielsweise durch gradlinige Abschnitte, die in flachen Winkeln ineinander übergehen, solange mindestens ein vollständiger Umlauf gemäß der zweiten Ausführungsform der erfindungsgemäßen Kalibrierhülse bzw. ein anteiliger Umlauf gemäß der ersten Ausführungsform der erfindungsgemäßen Hülse durch die Mantelfläche der Hülse vollzogen ist. Der zusätzliche Schlitz ist bei erster und zweiter Ausführungsform über die gesamte Länge der Kalibrierhülse geführt, um die Veränderung des Hülsendurchmessers in gleichmäßiger Art und Weise zu gewährleisten.

Als Material für die Kalibrierhülse ist Metall einsetzbar, insbesondere Messing, Bronze, Aluminium, Stahl oder deren Legierungen, so wie Kunststoffe.

In einer weiteren Ausführungsform weist die erfindungsgemäße Kalibrierhülse gemäß erster oder zweiter Ausführungsform im Bereich der Eintrittsöffnung einen im Durchmesser unveränderlichen Abschnitt auf. In diesem unveränderlichen Abschnitt, der einer bekannten statischen Kalibrierhülse entspricht, verläuft kein zusätzlicher Schlitz, sodass die Hülse hier nicht durch äußere Kräfte in ihrem Durchmesser verringert werden kann. Bei der Ausführungsform der verstellbaren Kalibrierhülse ist dann eine teilweise Trennung zum nicht verstellbaren Bereich erforderlich, wie beispielsweise ein Radialschlitz, der die Hülsenwandung nicht vollständig durchtrennt, sondern mindestens einen Verbindungsbereich der Wandung stehenläßt. Alternativ wird eine erfindungsgemäße Kalibrierhülse in einer solchen Vorrichtung zur Kalibrierung mit Mechanismus für die Verstellung ihres Durchmessers angeordnet, in der ein zusätzlicher Abschnitt einer im Durchmesser unveränderlichen Kalibrierhülse im Eintrittsbereich der Vorrichtung liegt und die erfindungsgemäße Kalibrierhülse in Durchtrittsrichtung des Kunststoffrohrs dahinter liegt, sodass beide Hülsenabschnitte einen Verbindungsbereich aufweisen.

Die erfindungsgemäße Kalibrierhülse wird zur Kalibrierung von Kunststoffrohren in einer Vorrichtung zur Kalibrierung gehalten, wobei diese Vorrichtung auch einen Mechanismus zur Veränderung des Durchmessers der Kalibrierhülse enthält. Die bevorzugte Vorrichtung zur Kalibrierung extrudierter Kunststoffrohre weist eine erfindungsgemäß verstellbare Kalibrierhülse auf, die zwischen Druckstangen anzuordnen ist, welche einen Käfig zur Halterung bilden. Die Druckstangen verlaufen parallel zur Achse der Kalibrierhülse und weisen eine ebene Oberfläche an der Seite auf, mit der sie auf der Kalibrierhülse aufliegen.

Der Durchmesser der Kalibrierhülse lässt sich nun durch paralleles Verschieben der Druckstangen gegeneinander gleichmäßig verringern.

Zur näheren Erläuterung ist ein Beispiel einer erfindungsgemäßen verstellbaren Kalibrierhülse in den Figuren dargestellt, in denen
Figur 1 eine schematische Aufsicht auf die Kalibrierhülse gemäß erster Ausführungsform zeigt,
Figur 2 eine schematische Innenansicht einer Kalibrierhülse gemäß erster Ausführungsform im Schnitt zeigt,
Figur 3 eine schematische Seitenansicht auf die Kalibrierhülse gemäß zweiter Ausführungsform zeigt und
Figur 4 eine schematische Schnittzeichnung durch eine Vorrichtung zur Kalibrierung eines extrudierten Kunststoffrohrs mit einer der erfindungsgemäßen Kalibrierhülsen zeigt.

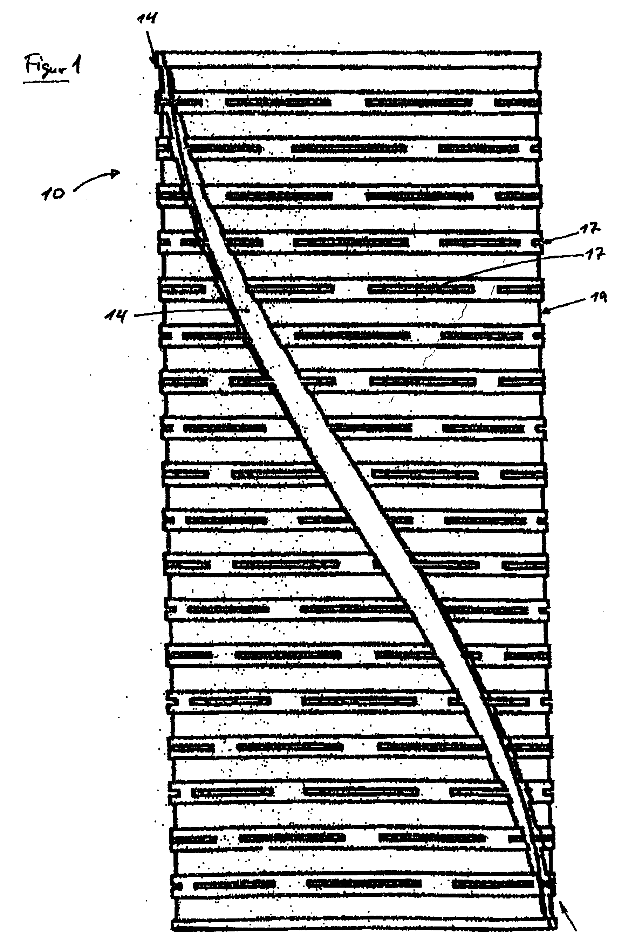

In Figur 1 ist die erste Ausführungsform der Kalibrierhülse 10 gezeigt, bei der der zusätzliche Schlitz wendelförmig in einem 0,45- fachen Umlauf um die Hülsenachse verläuft. Durch die perspektivische Darstellung verringert sich scheinbar die Breite des Wendelschlitzes 14 in der Kalibrierhülse 10 zu ihren Enden hin. Die Saugöffnungen 17 sind als radiale Langlöcher in die Kalibrierhülse 10 gesägt oder gefräst und zu den parallelen Saugöffnungen 17 versetzt, wie bei den bekannten statischen Hülsen. Die Saugöffnungen 17 sind teilweise zum zusätzlichen wendelförmigen Schlitz hin offen. Die äußeren Nuten 19, die eine Option sind, sind derart beabstandet, dass keine Verringerung der Wandstärke der Kalibrierhülse 10 in dem Bereich stattfindet, in dem die Saugöffnungen eingeordnet sind.

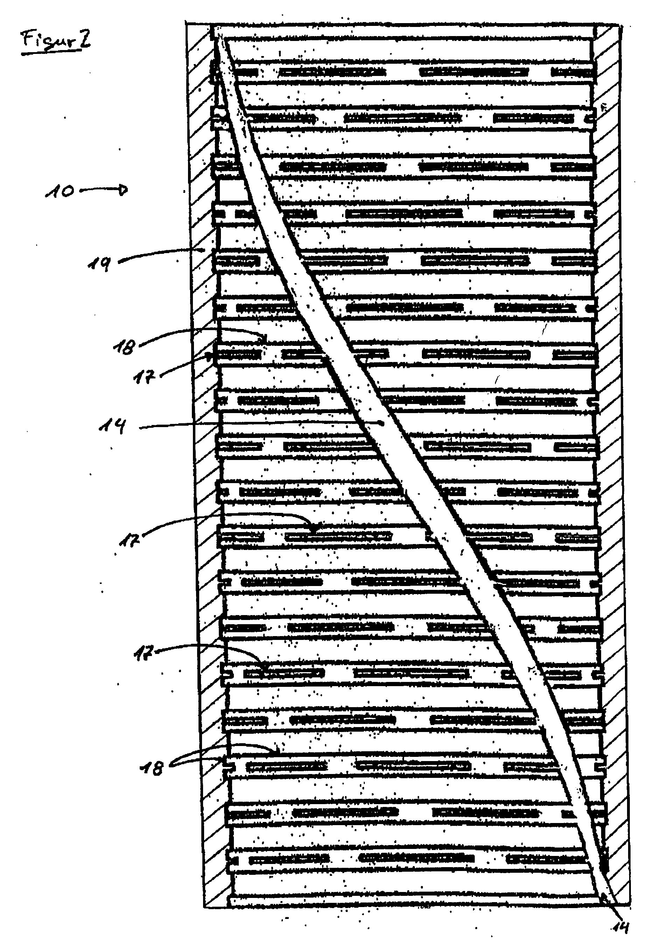

Figur 2 zeigt eine Innenansicht der ersten Ausführungsform der erfindungsgemäßen Kalibrierhülse im Schnitt. Der wendelförmig verlaufende zusätzliche Schlitz 14 entspricht dem von Figur 1, ebenso haben die Saugöffnungen die Form von Langlöchern und sind radial in die Hülsenwandung eingebracht und parallel zueinander versetzt. Die inneren Nuten 18 sind von der inneren Oberfläche aus in die Wandung der Kalibrierhülse 10 gedreht, um die Saugöffnungen 17 anschließend leichter bilden zu können.

Für alle Ausführungsformen können sowohl innere 18 als auch wahlweise äußere 19 Nuten in die Kalibrierhülse eingearbeitet sein, auch in Kombination miteinander.

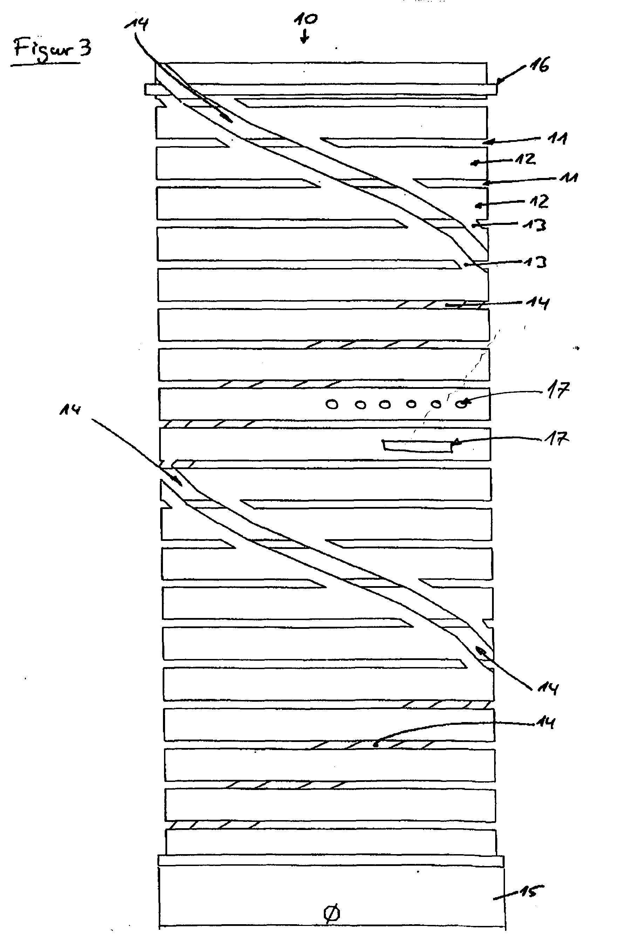

In Figur 3 ist eine Kalibrierhülse 10 gemäß der zweiten Ausführungsform gezeigt, die gleichmäßig beabstandete Radialschlitze 11 aufweist. Diese Radialschlitze begrenzen die dazwischen liegenden Ringabschnitte 12, welche wiederum durch die Verbindungsbereiche 13 miteinander verbunden sind. Der hier wendelförmig verlaufende zusätzliche Schlitz 14 verläuft hier zweimal vollständig um die Kalibrierhülse 10. Hier ist auch ersichtlich, dass erfindungsgemäß der zusätzliche wendelförmig ausgeführte Schlitz 14 auch in einer solchen Form verlaufen kann, die im wesentlichen die Schraubenform um die Hülsenachse herum aufweist, jedoch nicht stufenlos kurvenförmig verläuft, sondern in diesem Fall abschnittsweise gradlinig mit flachen Winkeln dazwischen geführt ist. Beispielhaft sind in ausschnittsweiser Darstellung Saugöffnungen 17 dargestellt, die für alle Ausführungsformen eine Option darstellen. Diese Saugöffnungen 17 sind als Langlöcher oder Bohrungen ausgeführt, die nur bereichsweise die Hülse durchbrechen, vorzugsweise im Bereich innerer 18 und/oder äußerer 19 Nuten.

Die Kalibrierhülse 10 weist in dieser Ausführungsform an ihren Enden die Anschlussflanschen 15 bzw. 16 auf.

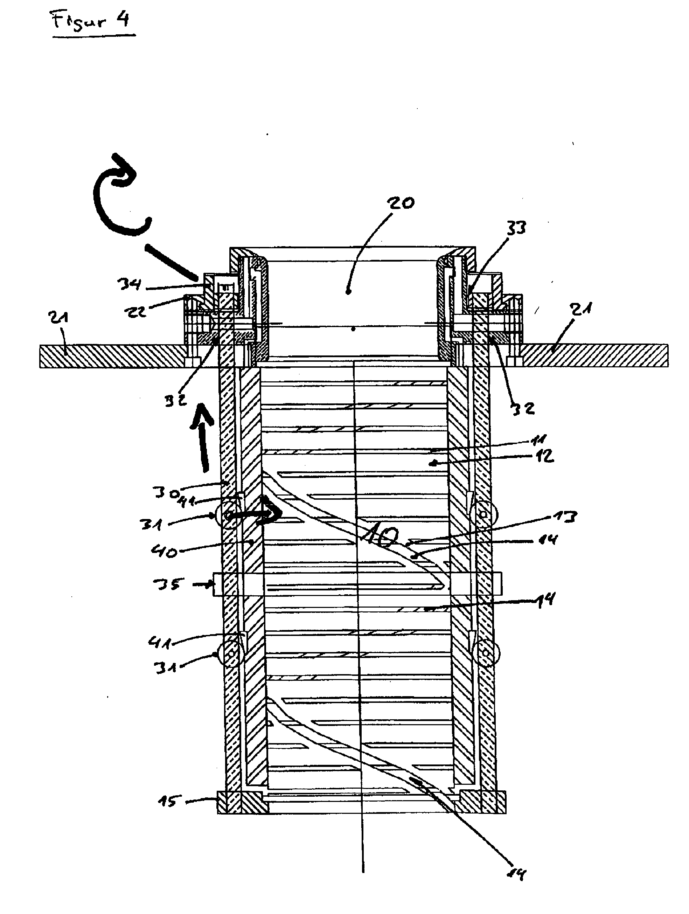

In Figur 4 grenzt die verstellbare Kalibrierhülse 10 an einen kürzeren unveränderlichen Abschnitt einer statischen Kalibrierhülse 20. Die statische Kalibrierhülse 20 bildet hier die Eintrittsöffnung für das extrudierte Kunststoffrohr. Die Druckstangen 40 bilden einen Käfig, der die Kalibrierhülse 10 hält. Dazu sind mindestens drei Druckstangen 40 erforderlich. Die Druckstangen 40 werden an ihrem einen Ende an einem Flansch 15 gehalten, der die Austrittsöffnung der Kalibrierhülse 10 bildet. Die Druckstangen 40 sind in regelmäßigen Abständen um die Kalibrierhülse 10 herum angeordnet, um einen Käfig zu bilden, vorzugsweise in einem Abstand von 1 bis 15 cm, vorzugsweise 2 bis 10 cm, um den Außenumfang der Kalibrierhülse 10. Die Druckstangen 40 sind mit ihren Enden in Richtung auf die Eintrittsöffnung der statischen Kalibrierhülse 20 mittelbar gegen einen Montageflansch 21 gesetzt. Die Austrittsöffnung der Kalibrierhülse 10 wird von einem Flansch 15 gebildet, von dem die Druckstangen 40 einen gewissen Abstand aufweisen, beispielsweise 1 bis 10 mm. Alternativ können die Druckstangen 40 in Führungsöffnungen oder -nuten im Flansch 15 geführt sein, sodass sie radial verschieblich sind, um Änderungen des Hülsendurchmessers aufnehmen zu können.

Jeder Druckstangen 40 ist eine Zugstange 30 zugeordnet, die zusammen einen Verstellmechanismus zur parallelen Verschiebung der Druckstangen 40 auf die Längsachse der Kalibrierhülse 10 hin bilden. Die Druckstangen 30 sind am Flansch 15 der Austrittsöffnung der Kalibrierhülse 10 gelagert, um axial verschieblich zu sein (beispielsweise in Gleitlagern) und weiterhin in mindestens einem Zentrierring 35 geführt.
Die Führung der Druckstangen 30 im Zentrierring 35 kann entweder in Form einer verschieblichen Führung oder in Form einer form- oder kraftschlüssigen Verbindung sein Ist es ist dabei wesentlich, dass der Zentrierring 35 die Zugsstangen 30 so führt, dass diese beim Ausüben Druck auf die Druckstangen 40 keine wesentliche Formveränderung erfahren, um eine parallele und vorherbestimmbare Verschiebung der Druckstangen 40 zu ermöglichen.

Die Zugstangen 30 sind weiterhin mit ihrem, dem Flansch 15 entgegengesetzten Ende in einem Halterring 33 für Zugstangen fixiert. Dieser Halterring 33 für Zugstangen weist ein Außengewinde auf, welches mit einem Innengewinde der Spannschraube 34 in Eingriff steht Die Spannschraube 34 wird durch einen Ringflansch drehbar in der Nut des Halterings 22 gehalten, der Haltering 22 wiederum ist an dem Montageflansch 21 befestigt. Ein Abschnitt der Zugstangen 30 zwischen ihrer Festlegung im Halterring 33 und dem Zentrierring 35 wird durch ein Führungloch 32 für Zugstangen 30 geführt. Diese Führungslöcher 32 sind jeweils ortsfest mit dem Montageflansch 21 verbunden und verhindern eine Drehung des Käfigs aus Zugstangen 30 um die Achse der Kalibrierhülse 10. Durch Drehen der Spannschraube 34 im Haltering 22 wird der Halterring 33 für Zugstangen in seiner Position verändert, wodurch die Zugstangen 30 gemeinsam in ihrer Längsrichtung verschoben werden. Durch Verschieben der Zugstangen 30 wird die Lage der Druckräder 31, die an den Zugstangen 30 gelagert sind, gegen die Druckkeile 41, die auf den Druckstangen 40 angeordnet sind, verändert. Auf diese Weise lassen sich durch Drehen der Spannschraube 34 die Zugstangen 30 in ihrer Längsrichtung verschieben und so die Druckstangen 40 aufeinander zu bewegen oder voneinander weg bewegen, um die Kalibrierhülse 10 in ihrem Durchmesser zu verringern bzw. zu vergrößern.

Anstelle der Druckräder 31 können auch Nocken oder Keilflächen auf den Zugstangen 30 angeordnet sein, die gegen die Keilflächen 41 auf den Druckstangen 40 wirken. Auf diese Weise bilden die zusammenwirkenden Druckräder 31 und Keilflächen 41 auf den Druckstangen 40 Elemente zur Veränderung des Durchmessers der Kalibrierhülse bei Parallelverschiebung von jeweils gegenüberliegenden Druckstangen 40 und Zugstangen 30.

Die erfindungsgemäße verstellbare Kalibrierhülse ist mit Bezug auf die Kalibrierung des äußeren Durchmessers von Kunststoffprofilen, beispielsweise Rohren oder zylindrischen Kunststoffvollkörpern beschrieben worden, eignet sich jedoch auch zur Kalibrierung des Innenprofils eines Kunststoffrohrs. Wenn die erfindungsgemäße Kalibrierhülse den Innendurchmesser eines Kunststoffrohrs formen soll, müssen natürlich die Halte- und Verstellmechanismen im Innern der Hülse untergebracht sein, d.h. die Anordnung von Druckstangen, Zugstangen etc. es sei ist seitenverkehrt im Innenraum der Kalibrierhülse anzubringen. Die erfindungsgemäße Kalibrierhülse selbst kann unverändert eingesetzt werden.

### Bezugszeichenliste

- 10: Kalibrierhülse
- 11: Radialschlitz
- 12: Ringabschnitt
- 13: Verbindungsbereich
- 14: Wendelschlitz
- 15: Flansch
- 16: Flansch
- 17: Saugöffnung
- 18: inneren Nut
- 19: äußere Nut
- 20: unveränderlicher Abschnitt, statische Hülse
- 21: Montageflansch
- 22: Haltering
- 30: Zugstange
- 31: Druckrad
- 32: Führungsloch für Zugstange
- 33: Halterring für Zugstange
- 34: Spannschraube
- 35: Zentrierring
- 40: Druckstange
- 41: Druckkeil

## Patentansprüche

1. Kalibrierhülse (10) mit ringförmigem Querschnitt, deren Durchmesser veränderlich ist, **dadurch gekennzeichnet, dass** die Kalibrierhülse (10) Radialschlitze (11) aufweist, die Ringabschnitte (12) voneinander bereichsweise trennen, sodass die Ringabschnitte (12) noch durch jeweils mindestens einem Verbindungsbereich (13) miteinander verbunden sind und dadurch, dass die Kalibrierhülse (10) einen zusätzlichen Schlitz (14) über ihre gesamte Länge aufweist, der in einem Winkel zur Achse der Kalibrierhülse (10) verläuft.

2. Kalibrierhülse (10) nach Anspruch 1, **dadurch gekennzeichnet, dass** der zusätzliche Schlitz (14) in einem Anteil von 0,2 bis 0,5 eines vollständigen Umlaufs durch die Hülsenwandung verläuft.

3. Kalibrierhülse (10) nach einem der vorangehenden Ansprüche, **dadurch gekennzeichnet, dass** die Kalibrierhülse Saugöffnungen (17) aufweist.

4. Kalibrierhülse nach Anspruch 3, **dadurch gekennzeichnet, dass** der zusätzliche Schlitz (14) in einem Anteil von 0,4 bis 0,5 eines vollständigen Umlaufs durch die Hülsenwandung verläuft und nicht die Saugöffnungen (17) oder Radialschlitze (11) kreuzt.

5. Kalibrierhülse (10) nach einem der vorangehenden Ansprüche, **dadurch gekennzeichnet, dass** die Kalibrierhülse innere Nuten (18) und/oder äußere Nuten (19) aufweist.

6. Kalibrierhülse (10) nach einem der vorangehenden Ansprüche, **dadurch gekennzeichnet, dass** ein Verbindungsbereich (13) jeweils zwei benachbarte Ringabschnitte (12) miteinander verbindet und die Verbindungsbereiche (13) in einem Bereich angeordnet sind, der parallel und versetzt zu dem zusätzlichen Schlitz (14) verläuft.

7. Kalibrierhülse (10) nach einem der Ansprüche 1 bis 5, **dadurch gekennzeichnet, dass** jeweils zwei Verbindungsbereiche (13) benachbarte Ringabschnitte (12) miteinander verbinden und die Verbindungsbereiche (13) auf beiden Seiten des zusätzlichen Schlitzes (14) angeordnet sind.

8. Kalibrierhülse (10) nach einem der vorangehenden Ansprüche, **dadurch gekennzeichnet, dass** die Kalibrierhülse (10) keine Radialschlitze (11) aufweist.

9. Kalibrierhülse (10) nach einem der Ansprüche 1 bis 7, **dadurch gekennzeichnet, dass** der zusätzliche Schlitz (14) ein bis fünf vollständige Umläufe um die Achse der Kalibrierhülse 10) beschreibt.

10. Kalibrierhülse (10) nach einem der vorangehenden Ansprüche, **dadurch gekennzeichnet, dass** ein zusätzlicher statischer Eintrittsbereich (20) vor der Kalibrierhülse (10) angeordnet ist, der keinen zusätzlichen Schlitz (14) aufweist, und mittels eines Radialschlitzes (11) abgeteilt ist, der die Hülsenwandung bis auf maximal einen Verbindungsbereich (13) unterbricht.

11. Kalibrierhülse (10) nach einem der vorangehenden Ansprüche, **dadurch gekennzeichnet, dass** der zusätzliche Schlitz (14) zumindest einen gradlinigen Abschnitt aufweist, der gegenüber der Achse der Kalibrierhülse geneigt verläuft.

12. Kalibrierhülse (10) nach einem der vorangehenden Ansprüche, **dadurch gekennzeichnet, dass** der zusätzliche Schlitz (14) wendelförmig verläuft.

13. Kalibrierhülse (10) nach einem der vorangehenden Ansprüche, **dadurch gekennzeichnet, dass** der zusätzliche Schlitz (14) durch jeweils eine statistisch angeordnete Unterbrechung in jedem der Ringabschnitte (12) gebildet wird, die parallel oder in einem Winkel zur Achse der Kalibrierhülse (10) verlaufen.

14. Vorrichtung zur Kalibrierung extrudierter Kunststoffprofile, **gekennzeichnet durch** eine Kalibrierhülse (10) nach einem der vorangehenden Ansprüche.

15. Vorrichtung nach Anspruch 14, **dadurch gekennzeichnet, dass** die Kalibrierhülse (10) von mindestens drei Druckstangen (40), die parallel zur Achse der Kalibrierhülse (10) verlaufen, eingefasst wird, wobei die Druckstangen (40) parallel zu jeweils einer zugeordneten Zugstange (30) verlaufen und zwischen diesen Stangen (30, 40) Elemente zur Veränderung des Durchmessers der Kalibrierhülse bei Parallelverschiebung von jeweils gegenüberliegenden Druckstangen (40) und Zugstangen (30) angeordnet sind.

16. Vorrichtung nach Anspruch 14 oder 15, **dadurch gekennzeichnet, dass** in Durchtrittsrichtung vor der Kalibrierhülse (10) ein zusätzlicher Abschnitt einer statischen, im Durchmesser unverstellbaren Kalibrierhülse (20) angeordnet ist.

17. Verfahren zur Kalibrierung extrudierter Kunststoffrohre, **gekennzeichnet durch** die Verwendung einer Kalibrierhülse (10) nach einem der Ansprüche 1 bis 13.
